# EUROPÄISCHE PATENTSCHRIFT

(11) **EP 0 526 458 B1**
(45) Veröffentlichungstag und Bekanntmachung des Hinweises auf die Patenterteilung: **27.07.1994**
(21) Anmeldenummer: 91904024.6
(22) Anmeldetag: 21.02.1991
(51) Int. Cl.: C02F 11/12

(54) **VERFAHREN UND ANLAGE ZUM VERWERTEN VON KLÄRSCHLAMM**
PROCESS AND EQUIPMENT FOR UTILIZING SEWAGE SLUDGE
PROCEDE ET INSTALLATION POUR L'UTILISATION DE BOUES DE CURAGE

(30) Priorität: 25.04.1990 DE 4013206
(43) Veröffentlichungstag der Anmeldung: 10.02.1993
(73) Patentinhaber: STEAG Aktiengesellschaft, 45128 Essen (DE)
(72) Erfinder: THELEN, Franz, D-4330 Mülheim (DE)
(86) Internationale Anmeldenummer: EP9100327
(87) Internationale Veröffentlichungsnummer: WO9116271

(56) Entgegenhaltungen:
- DE-A- 3 429 055
- GB-A- 2 052 708
- Joint Committee WPCF and Asce: Wasrewater Treatment Plant Design", 1977, WPCF, Washington, DC; USA, siehe Seite 491 Design Consideration- Seite 492 Haet Recovery

## Beschreibung

Die Erfindung betrifft ein Verfahren zum Trocknen von als Naßschlamm anfallendem Klärschlamm und zur Verwertung des getrockneten Schlamms, bei dem der Naßschlamm in zwei Fraktionen geteilt wird, die erste Fraktion verbrannt wird, die bei dieser Verbrennung entstehende Wärme der zweiten Fraktion zu deren Trocknung zugeführt wird und zumindest ein Teil des getrockneten Klärschlamms der zweiten Fraktion verbrannt wird.

Aus der DE-A-34 29 055 ist ein solches Verfahren bekannt, bei dem der Dickschlammstrom in zwei Teilströme geteilt wird. Der eine Strom wird in einem Trockner zugeführt, in dem er granuliert wird. Das Granulat wird über eine nachgeschaltete Zellradschleuse einem Trockengutspeicher zugeführt. Die nicht getrocknete Fraktion wird mit dem Trockengut vermischt und die Mischung bei einer Verbrennung zugeführt. Die Trocknung und Granulierung und die Zwischenspeicherung des trockenen Granulats in einem Trockengutspeicher dient als Puffer zur Erzielung konstanter Verhältnisse und einer autarken Verbrennung. Ein Abzug von Trockengut erfolgt nur zum Mischer hin. Der gesamte Inhalt an Verbrennlichen im Klärschlamm wird in dem Verbrennungsofen verbrannt. Die dabei erzeugte Wärme wird dem Trockner zugeführt.

Aus der GB-A 20 52 708 ist ein Verfahren zur Trocknung und Verbrennung von Klärschlamm bekannt, bei dem der Naßschlamm in einem Mischgranulator granuliert und das Granulat insgesamt einem Kontaktfließbett-Trockner mit Wirbelschicht zugeleitet wird. Eine Aufteilung in verschiedene Fraktionen ist nicht vorgesehen. Die Wirbelschichtfeuerung wird mit dem getrockneten Gut beschickt. In der Wirbelschichtfeuerung erfolgt die Verbrennung bei Temperaturen von 900°C und einer Verweilzeit von 30 Minuten. Es hat sich herausgestellt, daß das Aschegranulat einer Wirbelschichtfeuerung nicht unbedingt eluatfest ist, so daß eine Deponierung nur unter erschwerten Bedingungen möglich ist.

Der Erfindung liegt die Aufgabe zugrunde, ein Verfahren der gattungsgemäßen Art anzugeben, bei dem zum einen die Trocknung des Klärschlamms auf wirtschaftliche Art erfolgt und zum anderen ein nicht auslaugbares weiterverwertbares Granulat erzeugt wird.

Diese Aufgabe wird dadurch gelöst, daß die Verbrennung der ersten Fraktion des Naßschlamms so gesteuert wird, daß gerade soviel Wärme erzeugt wird, wie für die Trocknung der zweiten Fraktion des Naßschlamms benötigt wird, und daß zumindest ein Teil des getrockneten Klärschlamms der zweiten Fraktion in einer Schmelzfeuerung verbrannt wird, der auch die bei der Verbrennung der ersten Fraktion des Naßschlamms entstehende Schlacke zugeführt wird.

Bei der erfindungsgemäßen Verfahrensführung wird also bei der Verbrennung der ersten Fraktion des Naßschlamms gerade so viel Wärme erzeugt, wie für die Trocknung der zweiten Fraktion des Naßschlamms benötigt wird. Das Verfahren arbeitet also mit optimalem Wirkungsgrad. Die Zufuhr zusätzlicher ggf. hochwertiger Fremdenergie für die Trocknung wird also weitestgehend vermieden. Da der Teil des getrockneten Klärschlamms zusammen mit der bei der Verbrennung der ersten Fraktion des Naßschlamms entstehenden Schlacke in einer Schmelzfeuerung verbrannt wird, entsteht ein nicht auslaugbares weiterverwertbares Granulat. Da der Schmelzfeuerung kein Naßschlamm zugeführt wird, wird in dessen Betrieb auch nicht eingegriffen.

Bei der Verbrennung des Naßschlamms kann insbesondere durch seinen Wassergehalt dafür gesorgt werden, daß die Verbrennung mit einem optimalen Luftüberschuß von ca. 1,2 bei Temperaturen zwischen ca. 800 und 900°C abläuft. Der getrocknete Klärschlamm ist ohne weiteres transportfähig. Seine Energie läßt sich überall dort nutzbar machen, wo sie benötigt wird.

Das Verfahren nach der Erfindung wird bevorzugt kontinuierlich betrieben, kann jedoch auch chargenweise arbeiten.

Dabei schlägt die Erfindung vor, daß vorzugsweise ein Teil des getrockneten Klärschlamms der ersten Fraktion des Naßschlamms vor dessen Verbrennung zugesetzt wird, wodurch sich die Möglichkeit ergibt, das erfindungsgemäße Verfahren auch auf solche Klärschlämme anzuwenden, die nur einen relativ geringen Anteil an Trockensubstanz enthalten. In Extremfällen, d. h., bei zu geringem Anteil an Trockensubstanz im Klärschlamm, läßt sich dessen Energie dennoch nutzen, und zwar erfindungsgemäß dadurch, daß der ersten Fraktion des Naßschlammes zu dessen Verbrennung Fremdenergie zugeführt wird. Dabei muß nur ein geringer Anteil an Fremdenergie aufgewendet werden, und zwar gerade so viel, wie benötigt wird, um den Naßschlamm verbrennbar zu machen. Enthält der Naßschlamm hingegen überdurchschnittlich viel Trockensubstanz und ist diese ggf. besonders hochkalorik, so schlägt die Erfindung zur Steuerung des Verfahrens vor, daß die Verbrennung der ersten Fraktion des Naßschlamms mit hohem Luftüberschuß erfolgt und/oder bei der Verbrennung Rauchgas rezirkuliert wird. Unter allen Umständen wird man bestrebt sein, die Verbrennungstemperatur auf ca. 800 bis 900°C einzustellen. Eine weitere erfindungsgemäße Steuerungsmaßnahme besteht darin, daß ein Teil des getrockneten Klärschlamms der zweiten Fraktion des Naßschlamms vor dessen Trocknung zugesetzt wird. Dabei kommt es außerdem zu einem gewissen Granulieren des Naßschlamms. Letzterer kann also in den nachgeschalteten Apparaturen nicht in die Leimphase eintreten.

Vorzugsweise ist das Verfahren nach der Erfindung dadurch gekennzeichnet, daß die zweite Fraktion des Naßschlamms in einer Wirbelschicht getrocknet wird und daß das Fluid der Wirbelschicht von der bei der Verbrennung der ersten Fraktion entstehenden Wärme aufgeheizt wird. Es wurde gefunden, daß sich eine Wirbelschicht-Trocknung für den erfindungsgemäßen Zweck in optimaler Weise eignet.

Dabei ist es besonders vorteilhaft, daß das im Kreislauf geführte Fluid der Wirbelschicht durch Wärmetausch mit dem Abgas aufgeheizt wird, welches bei der Verbrennung der ersten Fraktion des Naßschlamms entsteht. Dadurch ist sichergestellt, daß das Abgas nicht durch die aus dem Klärschlamm ausgetriebenen Brüden verunreinigt wird. Es bleibt frei von organischen Bestandteilen, so daß zu seiner Reinigung konventionelle Reinigungseinrichtungen, z. B. ein Staubfilter und ggf.eine NOₓ-Reduzierung genügen. Alternativ wird dieser Vorteil erfindungsgemäß auch dadurch erzielt, daß mit der Wärme, die bei der Verbrennung der ersten Fraktion des Naßschlamms entsteht, Dampf erzeugt wird und daß der Dampf als Heizmedium zum Trocknen der zweiten Fraktion des Naßschlamms verwendet wird. In jedem Falle ist es vorteilhaft, daß die Brüden bei der Trocknung der zweiten Fraktion des Naßschlamms entstehenden Brüden kondensiert und entsorgt, ggf. in die Kläranlage zurückgeführt werden. Wird das Fluid im Kreislauf durch die Wirbelschicht geführt, so wird jeweils ein Teil für die Kondensation abgezweigt.

Ein weiteres vorteilhaftes Merkmal der Erfindung besteht darin, daß die Asche, die bei der Verbrennung der ersten Fraktion des Naßschlamms entsteht, dem getrockneten Klärschlamm vor dessen Verwertung zugesetzt wird. Die Asche durchläuft also auch die vorzugsweise von einem Schmelzkammerkessel gebildete Verwertungsstufe und kann ebenfalls in nicht auslaugbares, weiterverwertbares Granulat umgewandelt werden.

Besonders günstige Verhältnisse ergeben sich erfindungsgemäß dadurch, daß nicht nur die Trocknung in einer Wirbelschicht geschieht, sondern daß auch die Verbrennung der ersten Fraktion des Naßschlamms in einer Wirbelschicht durchgeführt wird.

Die Erfindung schafft ferner eine Anlage zum Trocknen und Verwerten von Klärschlamm mit einer Verwertungseinrichtung und einer vorgeschalteten Trocknungseinrichtung, bei der die Trocknungseinrichtung eine mit einer ersten Fraktion des Naßschlamms beschickbare Wirbelschicht-Verbrennungsvorrichtung und eine mit einer zweiten Fraktion des Naßschlamms beschickbare Trocknungsvorrichtung aufweist, wobei die Verbrennungsvorrichtung und die Trocknungsvorrichtung thermisch miteinander gekoppelt sind.

Erfindungsgemäß ist diese Anlage dadurch gekennzeichnet, daß die Verwertungseinrichtung eine der Trocknungseinrichtung nachgeschaltete Schmelzkammerfeuerung ist.

Bei der Trocknungsvorrichtung kann es sich grundsätzlich um einen beliebigen Trockner bekannter Bauart handeln, beispielsweise um einen Scheibentrockner oder Dünnschichttrockner. Besonders vorteilhaft hingegen ist, wenn die Trocknungsvorrichtung in an sich bekannter Weise als Wirbelschicht-Trocknungsvorrichtung ausgebildet ist.

Die Anlage nach der Erfindung ist vorzugsweise gekennzeichnet durch einen Wärmetauscher, der einerseits von dem im Kreislauf geführten Fluid der Wirbelschicht-Trocknungsvorrichtung und andererseits von dem Abgas der Wirbelschicht-Verbrennungsvorrichtung beaufschlagt wird. Fluid und Abgas bleiben also voneinander getrennt und können gesondert mit jeweils optimal angepaßten Mitteln entsorgt werden, was insgesamt relativ einfach ist. Dies gilt auch für die von der Erfindung ferner vorgeschlagene Alternative, die gekennzeichnet ist durch einen Abhitze-Dampfkessel, der dampfseitig an die Trocknungsvorrichtung und beheizungsseitig an die Wirbelschicht-Verbrennungsvorrichtung angeschlossen ist. In jedem Falle schlägt die Erfindung einen Brüden-Kondensator vor, der der Trocknungsvorrichtung nachgeschaltet ist und die dort gegebenenfalls im Kreislauf geführten Brüden entsorgt.

Als erfindungswesentlich offenbar gelten auch solche Kombinationen der erfindungsgemäßen Merkmale, die von den obigen Verknüpfungen abweichen.

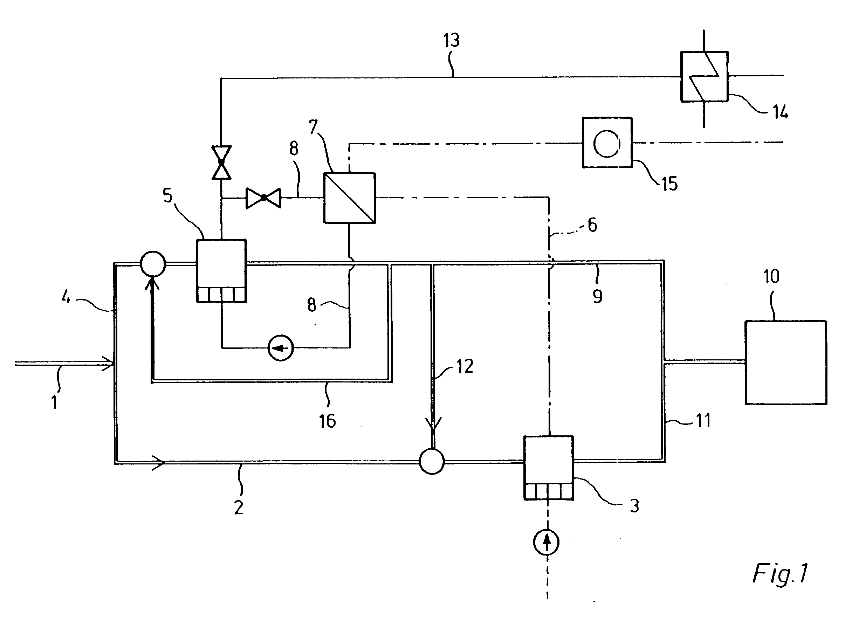

Die Erfindung wird im folgenden anhand einer bevorzugten Ausführungsform einer erfindungsgemäßen Anlage im Zusammenhang mit der beiliegenden Zeichnung näher erläutert. Die Zeichnung zeigt ein Fließschema der Anlage.

Der als Naßschlamm zur Verfügung stehende Klärschlamm wird durch einen Strang 1 zugeführt und in zwei Fraktionen unterteilt, von denen die erste durch einen Strang 2 zu einer Wirbelschicht-Verbrennungsvorrichtung 3 gelangt. Die zweite Fraktion wird durch einen Strang 4 einer Wirbelschicht-Trocknungsvorrichtung 5 zugeführt. Bei den Strängen 1, 2 und 4 kann es sich um Leitungen, Förderbänder o.dgl. handeln.

In der Wirbelschicht-Verbrennungsvorrichtung 3 entstehen heiße Rauchgase, die über eine Leitung 6 zu einem Wärmetauscher 7 gelangen. Der Wärmetauscher 7 ist ferner über eine Leitung 8 mit der Wirbelschicht-Trocknungsvorrichtung 5 verbunden. Durch die Leitung 8 wird das Fluid der Wirbelschicht-Trocknungsvorrichtung 5 im Kreislauf gefördert. Es heizt sich dabei im Wärmetauscher 7 auf und führt somit die für die Trocknung erforderliche Energie der Wirbelschicht-Trocknungsvorrichtung 5 zu.

Das erfindungsgemäße Verfahren wird so gesteuert, daß in der Wirbelschicht-Verbrennungsvorrichtung 3 gerade so viel Naßschlamm verbrannt wird, wie für die Trocknung des restlichen Naßschlammes in der Wirbelschicht-Trockenvorrichtung 5 erforderlich ist. Dabei werden die Verhältnisse so gewählt, daß die Verbrennung mit einem Luftüberschuß von 1,2 bei Temperaturen zwischen 800 und 900°C abläuft.

Der getrocknete Klärschlamm wird über einen Strang 9 zu einer Verwertungeinrichtung 10 gefördert. Bei letzterer handelt es sich erfindungsgemäß um einen Schmelzkammerkessel eines Großkraftwerkes. Hier wird der getrocknete Klärschlamm unter Energieabgabe in nicht auslaugbares, weiterverwertbares Granulat umgewandelt. Letzteres gilt auch für die aus der Wirbelschicht-Verbrennungsvorrichtung 3 stammende Asche, die über einen Strang 11 dem getrockneten Klärschlamm zugesetzt wird.

Die Stränge 9 und 2 stehen über einen Strang 12 miteinander in Verbindung. Durch letzteren wird getrockneter Klärschlamm der ersten, zu verbrennenden Fraktion des Naßschlammes beigemischt. Diese Maßnahme kann dann ergriffen werden, wenn der Anteil an Trockensubstanz im Naßschlamm relativ gering ist. Ggf. kann außerdem Fremdenergie eingesetzt werden.

Von der Leitung 8, die das Fluid der Wirbelschicht-Trockenvorrichtung 5 im Kreislauf fördert, zweigt eine Leitung 13 ab, durch die ein Teil dieses Fluids zu einem Brüden-Kondensator 14 gefördert wird. Die kondensierten Bürden gelangen in die Kläranlage zurück oder werden gereinigt abgeleitet.

Die aus der Wirbelschicht-Verbrennungsvorrichtung 3 stammenden und durch den Wärmetauscher 7 geführten Rauchgase werden von den Brüden getrennt gehalten und bleiben somit frei von organischen Bestandteilen. Sie werden einer Rauchgasreinigungsvorrichtung 15 zugeführt und gelangen sodann in die Atmosphäre.

Von dem Strang 9 zweigt ferner ein Strang 16 ab, der getrockneten Klärschlamm vor der Wirbelschicht-Trocknungsvorrichtung in den Strang 4, also in die zweite Fraktion des Naßschlammes einführt. Auf diese Weise wird die Leimphase des Naßschlammes vermieden, d.h., es kann nicht zu einem Verkleben der Wirbelschicht-Trocknungsvorrichtung 5 kommen.

Im Rahmen der Erfindung sind ohne weiteres Abwandlungsmöglichkeiten gegeben. So kann die in der Wirbelschicht-Verbrennungsvorrichtung 3 erzeugte Wärme dazu verwendet werden, Dampf zu erzeugen, der einem Wärmetauscher in der Wirbelschicht-Trocknungsvorrichtung 5 zugeführt wird. Auch in diesem Falle treten die Rauchgase der Wirbelschicht-Verbrennungsvorrichtung 3 nicht mit den aus der Wirbelschicht-Trocknungsvorrichtung 5 austretenden Brüden in Berührung. Als Trocknungsvorrichtung kann auch ein Scheiben- oder Dünnschichttrockner eingesetzt werden. Ferner kann anstelle des gezeigten Schmelzkammerkessels eine beliebige andere Verwertungseinrichtung Verwendung finden. Die gezeigte Anlage arbeitet kontinuierlich, jedoch ist auch ein chargenweiser Betrieb möglich.

### Beispiel.

Die in der Figur dargestellte Anlage wird mit einem Naßschlamm beschickt, der einen Anteil an Trockensubstanz von 30% enthält. Durch die Leitung 1 werden 6,0 t/h zugeführt, wobei 3,0 t/h durch die Leitung 2 und 3,0 t/h durch die Leitung 4 strömen. Die Wirbelschicht-Trocknungsvorrichtung 5 besitzt eine Entwässerungsleistung von 2,0 t/h. In die Leitung 9 treten dementsprechend 1,0 t/h an getrocknetem Klärschlamm ein. Hiervon werden 0,6 t/h durch die Leitung 12 in die Leitung 2 eingegeben. Die Wirbelschicht-Verbrennungsvorrichtung 3 wird also mit 3,6 t/h beschickt. Der Ascheaustrag beträgt 0,8 t/h. Diese werden mit den verbleibenden 0,4 t/h des getrockneten Klärschlammes zusammengeführt, so daß also die Verwertungseinrichtung 10 mit einer Menge von 1,2 t/h an Trockenmaterial beschickt wird.

Sobald die Konzentration der Trockensubstanz im Klärschlamm einen bestimmten Wert unterschreitet, ist das erfindungsgemäße Verfahren nur noch unter Einsatz von Fremdenergie praktikabel. Dieser Wert hängt ab von dem Heizwert des Klärschlammes. Andererseits erübrigt sich eine Förderung getrockneten Klärschlamms durch die Leitung 12, sobald die Konzentration an Trockensubstanz einen bestimmten Wert überschreitet. Auch dieser Wert hängt vom Heizwert des Klärschlammes ab. Ggf. reicht die Menge an Wasser im Naßschlamm nicht aus, die Verbrennungstemperatur niedrig zu halten. Sodann empfiehlt sich eine entsprechende Regelung der Luftzahl oder einer Abgaszirkulation.

## Patentansprüche

1. Verfahren zum Trocknen von als Naßschlamm anfallendem Klärschlamm und zur Verwertung des getrockneten Schlamms, bei dem der Naßschlamm in zwei Fraktionen geteilt wird, die erste Fraktion verbrannt wird, die bei dieser Verbrennung entstehende Wärme der zweiten Fraktion zu deren Trocknung zugeführt wird und zumindest ein Teil des getrockneten Klärschlamms der zweiten Fraktion verbrannt wird,
**dadurch gekennzeichnet,**
daß die Verbrennung der ersten Fraktion des Naßschlamms so gesteuert wird, daß gerade soviel Wärme erzeugt wird, wie für die Trocknung der zweiten Fraktion des Naßschlamms benötigt wird, und daß zumindest ein Teil des getrockneten Klärschlamms der zweiten Fraktion in einer Schmelzfeuerung verbrannt wird, der auch die bei der Verbrennung der ersten Fraktion des Naßschlamms entstehende Schlacke zugeführt wird.

2. Verfahren nach Anspruch 1,
dadurch gekennzeichnet,
daß ein Teil des getrockneten Klärschlamms der ersten Fraktion des Naßschlamms vor dessen Verbrennung zugesetzt wird.

3. Verfahren nach Anspruch 1 oder 2,
dadurch gekennzeichnet,
daß der ersten Fraktion des Naßschlamms zu dessen Verbrennung Fremdenergie zugeführt wird.

4. Verfahren nach Anspruch 1 oder 2,
dadurch gekennzeichnet,
daß die Verbrennung der ersten Fraktion des Naßschlamms mit hohem Luftüberschuß erfolgt und/oder bei der Verbrennung Rauchgas rezirkuliert wird.

5. Verfahren nach einem der Ansprüche 1 bis 4,
dadurch gekennzeichnet,
daß ein Teil des getrockneten Klärschlamms der zweiten Fraktion des Naßschlamms vor dessen Trocknung zugesetzt wird.

6. Verfahren nach einem der Ansprüche 1 bis 5,
dadurch gekennzeichnet,
daß die zweite Fraktion des Naßschlamms in einer Wirbelschicht getrocknet wird und daß das Fluid der Wirbelschicht von der bei der Verbrennung der ersten Fraktion entstehenden Wärme aufgeheizt wird.

7. Verfahren nach Anspruch 6
dadurch gekennzeichnet,
daß das im Kreislauf geführte Fluid der Wirbelschicht durch Wärmetausch mit dem Abgas aufgeheizt wird, welches bei der Verbrennung der ersten Fraktion des Naßschlamms entsteht.

8. Verfahren nach einem der Ansprüche 1 bis 6,
dadurch gekennzeichnet,
daß mit der Wärme, die bei der Verbrennung der ersten Fraktion des Naßschlamms entsteht, Dampf erzeugt wird und daß der Dampf als Heizmedium zum Trocknen der zweiten Fraktion des Naßschlamms verwendet wird.

9. Verfahren nach einem der Ansprüche 1 bis 8,
dadurch gekennzeichnet,
daß die bei der Trocknung der zweiten Fraktion des Naßschlamms entstehenden Brüden kondensiert und entsorgt werden.

10. Verfahren nach einem der Ansprüche 1 bis 9,
dadurch gekennzeichnet,
daß die Asche, die bei der Verbrennung der ersten Fraktion des Naßschlamms entsteht, dem getrockneten Klärschlamm vor dessen Verbrennung in der Schmelzkammerfeuerung zugesetzt wird.

11. Verfahren nach einem der Ansprüche 1 bis 10,
dadurch gekennzeichnet,
daß die Verbrennung der ersten Fraktion des Naßschlamms in einer Wirbelschicht durchgeführt wird.

12. Anlage zum Trocknen und Verwerten von Klärschlamm mit einer Verwertungseinrichtung (10) und einer vorgeschalteten Trocknungseinrichtung, bei der die Trocknungseinrichtung eine mit einer ersten Fraktion (2) des Naßschlamms (1) beschickbare Wirbelschicht-Verbrennungsvorrichtung (3) und eine mit einer zweiten Fraktion (4) des Naßschlamms beschickbare Trocknungsvorrichtung (5) aufweist, wobei die Verbrennungsvorrichtung (3) und die Trocknungsvorrichtung (5) thermisch miteinander gekoppelt sind,
dadurch gekennzeichnet,
daß die Verwertungseinrichtung eine der Trocknungseinrichtung (5) nachgeschaltete Schmelzkammerfeuerung (10) ist.

13. Anlage nach Anspruch 12,
dadurch gekennzeichnet,
daß die Trocknungsvorrichtung als Wirbelschicht-Trocknungsvorrichtung (5) ausgebildet ist.

14. Anlage nach Anspruch 13,
gekennzeichnet durch einen Wärmetauscher (7), der einerseits von dem im Kreislauf geführten Fluid der Wirbelschicht-Trocknungsvorrichtung (5) und andererseits von dem Abgas der Wirbelschicht-Verbrennungsvorrichtung (3) beaufschlagt wird.

15. Anlage nach Anspruch 12 oder 13,
gekennzeichnet durch einen Abhitze-Dampfkessel, der dampfseitig an die Trocknungsvorrichtung (5) und beheizungsseitig an die Wirbelschicht-Verbrennungsvorrichtung (3) angeschlossen ist.

16. Anlage nach einem der Ansprüche 12 bis 15,
gekennzeichnet durch einen Brüden-Kondensator (14), der der Trocknungsvorrichtung (5) nachgeschaltet ist.

## Claims

1. Process for the drying of clarified sludge obtained as wet sludge and for the utilisation of the dried sludge, in which the wet sludge is divided into two fractions, the first fraction is combusted, the heat arising in this combustion is delivered to the second fraction for drying thereof and at least a part of the dried clarified sludge of the second fraction is combusted, characterised thereby that the combustion of the first fraction of the wet sludge is so controlled that just so much heat is produced as is needed for the drying of the second fraction of the wet sludge, and that at least a part of the dried clarified sludge of the second fraction is combusted in a slag furnace, to which the slag arising in the combustion of the first fraction of the wet sludge is also fed.

2. Process according to claim 1, characterised thereby that a part of the dried clarified sludge is added to the first fraction of the wet sludge before combustion thereof.

3. Process according to claim 1 or 2, characterised thereby that outside energy is fed to the first fraction of the wet sludge for the combustion thereof.

4. Process according to claim 1 or 2, characterised thereby that the combustion of the first fraction of the wet sludge takes place with high excess air and/or flue gas is recirculated during the combustion.

5. Process according to one of claims 1 to 4, characterised thereby that a part of the dried clarified sludge is fed to the second fraction of the wet sludge before drying thereof.

6. Process according to claims 1 to 5, characterised thereby that the second fraction of the wet sludge is dried in a fluidised bed and that the fluid of the fluidised bed is heated up by the heat arising in the combustion of the first fraction.

7. Process according to claim 6, characterised thereby that fluid, which is conducted in the circuit, of the fluidised bed is heated up through heat exchange with the waste gas which arises during the combustion of the first fraction of the wet sludge.

8. Process according to one of claims 1 to 6, characterised thereby that steam is generated by the heat which arises during the combustion of the first fraction of the wet sludge and that the steam is used as heating medium for the drying of the second fraction of the wet sludge.

9. Process according to one of claims 1 to 8, characterised thereby that vapours arising during the drying of the second fraction of the wet sludge are condensed and disposed of.

10. Process according to one of claims 1 to 9, characterised thereby that the ash which arises during the combustion of the first fraction of the wet sludge is added to the dried clarified sludge before combustion thereof in the slag tap furnace.

11. Process according to one of claims 1 to 10, characterised thereby that the combustion of the first fraction of the wet sludge is carried out in a fluidised bed.

12. Plant for the drying and utilisation of clarified sludge, with a utilisation equipment (10) and an upstream drying equipment, in which the drying equipment comprises a fluidised bed combustion device (3) loadable with a first fraction (2) of wet sludge (1) and a drying device (5) loadable with a second fraction (4) of the wet sludge, wherein the combustion device (3) and the drying device (4) are thermally coupled together, characterised thereby that the utilisation equipment is a slag tap furnace (10) connected behind the drying equipment (5).

13. Plant according to claim 12, characterised thereby that the drying equipment is constructed as a fluidised bed drying equipment (5).

14. Plant according to claim 13, characterised by a heat exchanger (7), which on the one hand is loaded by the fluid, which is conducted in the circuit, of the fluidised bed drying device (5) and on the other hand is loaded by the waste gas of the fluidised bed combustion device (3).

15. Plant according to claim 12 or 13, characterised by a waste heat boiler, which is connected on the steam side to the drying device (5) and on the heating side to the fluidised bed combustion device (3).

16. Plant according to one of claims 12 to 15, characterised by a vapours condensor 14, which is connected behind the drying device (5).

## Revendications

1. Procédé pour le séchage de boue d'égout se présentant sous forme de boue humide et pour l'exploitation de la boue séchée, dans lequel la boue humide est divisée en deux fractions, la première fraction est brûlée, la chaleur, résultant de cette combustion, est amenée à la seconde fraction pour le séchage de celle-ci et au moins une partie de la boue d'égout séchée de la deuxième fraction est brûlée, caractérisé en ce que la combustion de la première fraction de la boue humide est conduite de telle façon que juste autant de chaleur que nécessaire pour le séchage de la seconde fraction de la boue humide est produite et en ce qu'au moins une partie de la boue d'égout séchée de la seconde fraction est brûlée dans un foyer à cendres fondues auquel est également amenée la scorie résultant de la combustion de la première fraction de la boue humide.

2. Procédé selon la revendication 1, caractérisé en ce qu'une partie de la boue d'égout séchée est ajoutée à la première fraction de la boue humide avant la combustion de celle-ci.

3. Procédé selon la revendication 1 ou 2, caractérisé en ce que de l'énergie extérieure est amenée à la première fraction de la boue humide pour la combustion de celle-ci.

4. Procédé selon la revendication 1 ou 2, caractérisé en ce que la combustion de la première fraction de la boue humide s'effectue avec un excédent d'air élevé et/ou on fait recirculer du gaz de fumée lors de la combustion.

5. Procédé selon l'une des revendications 1 à 4, caractérisé en ce qu'une partie de la boue d'égout séchée est ajoutée à la seconde fraction de la boue humide avant le séchage de celle-ci.

6. Procédé selon l'une des revendications 1 à 5, caractérisé en ce que la seconde fraction de la boue humide est séchée dans une couche fluidisée turbulente et en ce que le fluide de la couche fluidisée turbulente est réchauffé par la chaleur résultant de la combustion de la première fraction.

7. Procédé selon la revendication 6, caractérisé en ce que le fluide de la couche fluidisée turbulente, amené dans le circuit, est réchauffé par échange de chaleur avec le gaz brûlé qui résulte lors de la combustion de la première fraction de la boue humide.

8. Procédé selon l'une des revendications 1 à 6, caractérisé en ce que de la vapeur est produite par la chaleur qui résulte lors de la combustion de la première fraction de la boue humide, et en ce que la vapeur est utilisée comme agent de chauffage pour le séchage de la seconde fraction de la boue humide.

9. Procédé selon l'une des revendications 1 à 8, caractérisé en ce que les buées, résultant du séchage de la seconde fraction de la boue humide, sont condensées et épurées.

10. Procédé selon l'une des revendications 1 à 9, caractérisé en ce que la cendre, qui résulte de la combustion de la première fraction de la boue humide, est additionnée à la boue d'égout séchée avant la combustion de celle-ci dans le foyer à cendres fondues.

11. Procédé selon l'une des revendications 1 à 10, caractérisé en ce que la combustion de la première fraction de la boue humide est exécutée dans une couche fluidisée turbulente.

12. Installation pour le séchage et l'exploitation de boue d'égout comprenant un dispositif d'exploitation (10) et un dispositif de séchage le précédant, dans laquelle le dispositif de séchage comporte un dispositif de combustion à couche fluidisée turbulente (3) pouvant être alimenté avec une première fraction (2) de la boue humide (1) et un dispositif de séchage (5) pouvant être alimenté avec une deuxième fraction (4) de la boue humide, le dispositif de combustion (3) et le dispositif de séchage (5) étant couplés entre eux thermiquement, caractérisée en ce que le dispositif d'exploitation est un foyer à cendres fondues (10) disposé après le dispositif de séchage (5).

13. Installation selon la revendication 12, caractérisée en ce que le dispositif de séchage est réalisé sous forme de dispositif de séchage (5) à couche fluidisée turbulente.

14. Installation selon la revendication 13, caractérisée par un échangeur de chaleur (7) qui est alimenté, d'une part, par le fluide du dispositif de séchage à couche fluidisée turbulente (5) s'écoulant en circuit et, d'autre part, par le gaz brûlé du dispositif de combustion à couche fluidisée turbulente (3).

15. Installation selon la revendication 12 ou 13, caractérisée par une chaudière à vapeur à récupération de chaleur perdue, qui est raccordée du côté vapeur au dispositif de séchage (5) et du côté chauffage au dispositif de combustion à couche fluidisée turbulente (3).

16. Installation selon l'une des revendications 12 à 15, caractérisée par un condenseur de buées (14) qui est disposé après le dispositif de chauffage (5).
